Europäisches Patentamt

**European Patent Office**

Office européen des brevets

(11) Veröffentlichungsnummer: **0 192 128**
**B1**

(12) # EUROPÄISCHE PATENTSCHRIFT

(45) Veröffentlichungstag der Patentschrift:
20.12.89

(51) Int. Cl.⁴: **G 03 B 1/48**

(21) Anmeldenummer: **86101506.3**

(22) Anmeldetag: **05.02.86**

(54) Vorrichtung zur Herstellung fotografischer Aufnahmen mit einer Planfilmbühne.

(30) Priorität: **16.02.85 DE 8504399 U**

(43) Veröffentlichungstag der Anmeldung:
**27.08.86 Patentblatt 86/35**

(45) Bekanntmachung des Hinweises auf die Patenterteilung:
**20.12.89 Patentblatt 89/51**

(84) Benannte Vertragsstaaten:
**DE FR GB IT**

(56) Entgegenhaltungen:
**DE-A- 2 521 605**
**DE-B- 1 906 725**
**DE-C- 2 240 507**
**US-A- 4 082 956**

(73) Patentinhaber: **Agfa-Gevaert AG,**
**D-5090 Leverkusen 1 (DE)**

(72) Erfinder: **Bauer, Walter, Heinrich-Wieland-Strasse 178,**
**D-8000 München 83 (DE)**
Erfinder: **Müller, Jürgen, Dipl.-Ing., Bozzarisstrasse 7,**
**D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zur Herstellung fotografischer Aufnahmen von vorzugsweise auf einem Bildschirm erscheinenden Röntgen- oder Ultraschall- oder dergleichen Bildern, wobei ein Objektiv zwischen dem Bild, vorzugsweise dem Bildschirm, und einer einen Film in Belichtungsstellung haltenden Planfilmbühne angeordnet ist.

Vorrichtungen dieser Art sind allgemein bekannt. Bei bekannten feststehenden Planfilmbühnen in derartigen Vorrichtungen wird gewöhnlich der Bildbereich des Films durch die in die Bühne eingreifenden Filmtransportmittel beschränkt, so dass nicht die ganze Filmfläche für eine Aufnahme zur Verfügung steht. Beispielsweise bei Mikrofichebühnen in Lesegeräten, die mit Retrieval-Vorrichtungen kombiniert werden können, ist schon vorgeschlagen worden, zum Transport der Mikrofiches in die und aus der Bühne an den in Transportrichtung verlaufenden Mikroficherändern Transportwalzenpaare angreifen zu lassen. Würde man diese Transportart auf Planfilmbühnen für Aufnahmegeräte der eingangs genannten Art anwenden, so würde die Dicke der Bühne erheblich erhöht und verbreitert werden und es würde ein breiterer Rand an beiden Seiten eines Films wegen der angreifenden Transportrollen für Aufnahmen verlorengehen.

Der Erfindung liegt nun die Aufgabe zugrunde, eine Vorrichtung der eingangs genannten Art zu schaffen, bei der der Film auf einfache Weise aus der Bühne befördert wird, ohne dass der Bild- bzw. Filmbereich während einer Aufnahme durch Transportmittel, z. B. Transportwalzen, beschnitten wird.

Diese Aufgabe wird erfindungsgemäss gelöst durch die Merkmale des Hauptanspruchs. Weitere vorteilhafte Merkmale der Erfindung sind den Unteransprüchen entnehmbar.

Die Erfindung wird anhand von Zeichnungen näher erläutert. Es zeigen

Fig. 1 einen abgebrochen gezeichneten Schnitt durch eine erfindungsgemässe Vorrichtung gemäss der Schnittlinie I–I der Fig. 2,

Fig. 2 eine perspektivische Darstellung der Filmbühne der Vorrichtung nach Fig. 1,

Fig. 3 eine Rückansicht der Filmbühne nach Fig. 2.

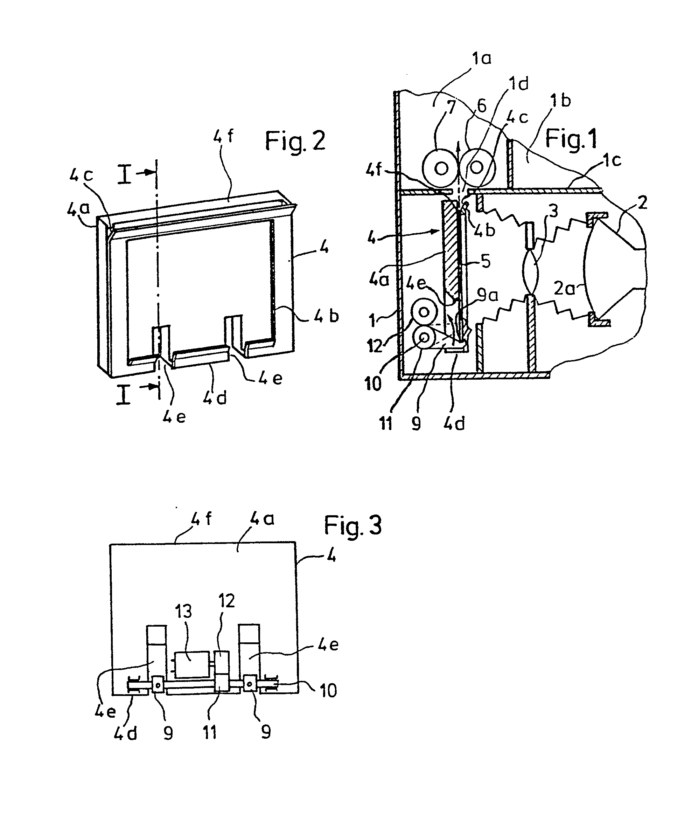

In Fig. 1 ist das Gehäuse eines Aufnahmegerätes schematisch dargestellt und mit 1 bezeichnet. Dabei werden die auf dem Bildschirm 2a einer Bildröhre 2 erscheinenden Bilder über ein Objektiv 3 auf einen in der Planfilmbühne 4 befindlichen Film 5 abgebildet. In darüberliegenden Gehäuseteilen 1a, 1b sind in bekannter und daher nicht gezeigter Weise ein Filmvorratsmagazin und ein Behälter für den belichteten Film und Transportmittel zum Bewegen eines Blattfilms 5 aus dem Magazin in die Bühne bzw. zurück in den Behälter für die belichteten Filme oder stattdessen direkt in eine angeschlossene Entwicklungsmaschine vorgesehen. Der Aufnahmeraum ist durch eine Trennwand 1c von den Verarbeitungsräumen 1a, 1b getrennt, wobei über der Filmbühne 4 ein Schlitz 1d in der Trennwand 1c vorgesehen ist zum Hindurchführen der Blattfilme 5. Unmittelbar über diesem Gehäuseschlitz 1d ist ein Transportwalzenpaar 6, 7 gelagert, das sowohl der Zuführung des Films 5 in die Bühne 4 als auch der Wegführung desselben aus der Bühne 4 dient.

Die Bühne 4 besteht aus einer Rückwand 4a, die in bekannter Weise mit einer pneumatischen Ansaugvorrichtung für den Film 5 ausgestattet bzw. verbunden sein kann, und einem vorderen Rahmenteil 4b, die zwischen sich einen Raum für die plane Halterung eines Films 5 freilassen, wobei der Filmraum an der dem Gehäuseschlitz 1d zugewandten Bühnenstirnseite in einem offenen Bühnenschlitz 4c zum Ein- und Ausführen des Films 5 endet. Dabei fluchten der Bühnenschlitz 4c, der Gehäuseschlitz 1d und die Berührungstangentialebene des Transprotwalzenpaares 6, 7 miteinander. Der Bühnenschlitz 4c ist dabei nahe der Bühnenstirnseite, in der er liegt, zu dieser hin geringfügig trichterähnlich erweitert, um die Einführung der Blattfilme 5, die manchmal auch etwas verbogen ankommen können, zu erleichtern.

Nachdem das Transportwalzenpaar 6, 7 ausserhalb der Bühne 4 liegt, ist es nicht in der Lage, einen in der Bühne befindlichen Film aus dieser herauszuholen. Bei der Einführung dagegen kann ein Film nach Freigabe durch die Walzen 6, 7 unter seinem Eigengewicht ganz in die Bühne hinein nach unten fallen. Es soll nun erreicht werden, dass keine Filmtransportmittel in das Bildfeld der Bühne während einer Aufnahme eingreifen und auch der Filmrand, der unter dem Rahmen 4b liegt, möglichst schmal sein kann. Hierzu sind die bekannten, eingangs beschriebenen Transportmittel nicht geeignet.

Deshalb weist die Bühne 4 an ihrer dem Schlitz 4c gegenüberliegenden Stirnseite 4d wenigstens eine, vorzugsweise jedoch zwei Ausnehmungen 4e auf, die diese Stirnseite 4d und den Rahmenteil 4b und die Rückseite 4a durchbrechen und wenigstens so tief in die Bühnenflachseiten bzw. in die Rückseite 4a eingreifen, wie der Abstand von der schlitzseitigen Stirnseite 4f der Bühne 4 von der Berührungslinie der Walzen 6, 7 ist. In diese Ausnehmungen 4e kann dann je ein an oder ausserhalb der Bühne hinter dieser gelagerten Mitnehmer 9 für den Film 5 eingreifen und zum Hinausschieben eines Filmblattes durch den Bühnenschlitz und den Gehäuseschlitz zu den Transportwalzen 6, 7 in Richtung auf diese geschoben oder geschwenkt werden.

Gemäss dem gezeigten Ausführungsbeispiel wird jeder Mitnehmer 9 durch einen einarmigen Hebel 9 gebildet, an dessen freiem Ende eine der Filmunterkante zugekehrte Kerbe 9a vorgesehen ist. Am anderen Ende sind alle Mitnehmerhebel 9 auf einer gemeinsamen Welle 10 gelagert, die über ein Untersetzungsgetriebe 11, 12 mit einem Elektromotor 13 gekuppelt ist. Wird die Welle 10 gemäss Fig. 1 entgegen dem Uhrzeigersinn gedreht, so werden die Hebel 9 von unten her in die Ausnehmungen 4e eingeschwenkt, greifen mit ihren Kerben 9a an der in ihrem Bewegungsweg liegenden Filmunterkante an und heben beim weiteren Einschwenken in die Ausnehmungen 4e einen Film 5 so weit an, dass er von den Transportwalzen 6, 7 erfasst und weitertransportiert wird. Dann werden die Mitnehmerhebel 9 in ihre Ausgangslage zurückgeschwenkt. Letztere kann gemäss Fig. 1 sogar noch innerhalb der Bühne 4, muss aber ausserhalb des durch den Rahmen 4b bestimmten Aufnahmebereichs liegen. Die Kerben 9a können dabei sogar in ihrer Ausgangslage die Auflage für die entsprechende Filmkante bilden, wobei im gezeigten Fall die Mitnehmer an der Bühnenunterseite liegen, so dass beim Einführen ein Blattfilm nach Freigabe durch die Walzen 6, 7 einfach darauf herunterfällt.

Naturgemäss sind auch noch andere, der Einfachheit halber in den Zeichnungen nicht gezeigte Ausführungsbeispiele möglich. So könnten an die Stelle der Mitnehmerhebel auch Mitnehmerschieber treten, die z. B. durch einen kurzen Seilzug hoch- und niedergeschoben werden. Wenn der Filmtransport statt von oben nach unten in umgekehrter oder seitlicher Richtung erfolgen soll, dann müssen an der Seite des Bühnenschlitzes noch weitere, den Ausnehmungen 4e entsprechende Ausnehmungen und diesen zugeordnete Mitnehmer vorgesehen sein, wobei die Mitnehmer jedoch bis zur Freigabe des Films durch die Walzen bzw. vor dessen Wiedererfassen durch die Walzen 6, 7 den Bühnenschlitz 4c völlig freigeben müssen.

## Patentansprüche

1. Vorrichtung zur Herstellung fotografischer Aufnahmen von vorzugsweise auf einem Bildschirm (2a) erscheinenden Röntgen- oder Ultraschall- oder dergleichen Bildern, wobei ein Objektiv (3) zwischen dem Bild, vorzugsweise dem Bildschirm (2a), und einer einen Film (5) in Belichtungsstellung haltenden Planfilmbühne (4) angeordnet ist, dadurch gekennzeichnet, dass längs einer Stirnseite (4f) der Bühne ein Schlitz (4c) zum Ein- und Ausführen der zu belichtenden bzw. belichteten Planfilme vorgesehen ist, und dass ausserhalb des Ein- und Ausführschlitzes (4c) ein sowohl der Beladung als auch der Entladung der Bühne (4) dienendes Transportwalzenpaar (6, 7) vorgesehen ist, dass die zum Schlitz (4c) parallele und diesem gegenüberliegende Bühnenstirnseite (4d) wenigstens eine in die Bühnenflachseiten (4a, 4b) reichende Ausnehmung (4e) aufweist und dass ein mit der benachbarten Kante eines in der Bühne (4) befindlichen Planfilms (5) in Eingriff bringbarer Mitnehmer (9, 9a) in der Ausnehmung (4e) anhebbar und absenkbar an der Vorrichtung (1) gelagert ist.

2. Vorrichtung nach Anspruch 1, dadurch gekennzeichnet, dass mehrere Ausnehmungen (4e) an der Bühne (4) und je Ausnehmung (4e) ein Mitnehmer (9) angebracht sind.

3. Vorrichtung nach einem der vorhergehenden Ansprüche, dadurch gekennzeichnet, dass die Tiefe der Ausnehmungen (4e) in der rückwärtigen Bühnenflachseite (4a) grösser ist als der Abstand zwischen der den Schlitz (4c) aufweisenden Stirnseite (4f) und der Berührungslinie der beiden Walzen (6, 7) des Transportwalzenpaares (4e) und dass die Ausnehmungen (4e) einen aufnahmeseitigen, einen in der Bühne (4) befindlichen Planfilm (5) haltenden Rahmenteil (4b) unterbrechen.

4. Vorrichtung nach einem der vorhergehenden Ansprüche, dadurch gekennzeichnet, dass die Mitnehmer durch Hebel (9) gebildet werden und an ihren in die Ausnehmungen (4e) greifenden, freien Hebelenden je eine die benachbarte Filmkante hintergreifende Kerbe (9a) aufweisen.

5. Vorrichtung nach Anspruch 4, dadurch gekennzeichnet, dass die Hebel (9) auf einer gemeinsamen Welle (10) gelagert sind, die mit einem Elektromotor (13) gekuppelt ist.

6. Vorrichtung nach einem der vorhergehenden Ansprüche, dadurch gekennzeichnet dass der Ein- und Ausführschlitz (4c) nach aussen hin trichterähnlich erweitert ist.

## Claims

1. Device for producing photographs of X-ray or ultrasound images preferably appearing on a screen (2a), in which an objective (3) is arranged between the image, preferably the screen (2a), and a flat film stage (4) holding a film (5) in the light exposure position, characterised in that a slot (4c) is provided along an end face (4f) of the stage for inserting and removing the flat films to be exposed or already exposed, a pair of transport rollers (6, 7) is provided outside the slot (4c) and serves both for loading and unloading the stage (4), the end face (4d) of the stage which is parallel to the slot (4c) and opposite the latter has at least one cut-out (4e) extending into the flat sides (4a, 4b) of the stage, and an engaging piece (9, 9a), which can be brought into engagement with the adjacent edge of a flat film (5) located in the stage (4), is mounted on the device so that it can be raised and lowered in the cut-out (4e).

2. Device as claimed in claim 1, characterised in that a plurality of cut-outs (4e) are provided on the stage (4) with one engaging piece (9) for each cut-out (4e).

3. Device as claimed in one of the preceding claims, characterised in that the depth of the cut-outs (4e) in the rearward flat face (4a) of the stage is greater than the distance between the end face (4f) having the slot (4c) and the line of contact of the two rollers (6, 7) of the pair of transport rollers, and on the receiving side the cut-outs (4e) interrupt a frame part (4b) holding a flat film (5) located in the stage (4).

4. Device as claimed in one of the preceding claims, characterised in that the engaging pieces are formed by levers (9) and the free ends of the levers which engage in the cut-outs (4e) each have a notch (9a) which engages behind an adjacent edge of the film.

5. Device as claimed in claim 4, characterised in that the levers (9) are mounted on a common shaft (10) which is coupled to an electric motor (13).

6. Device as claimed in one of the preceding claims, characterised in that the slot (4c) for inserting and removing the film is widened like a funnel towards the exterior.

## Revendications

1. Dispositif destiné à la réalisation de prises de vues photographiques d'images radiographiques ou par ultrasons ou similaires, apparaissant de préférence sur un écran (2a), un objectif (3) étant placé entre l'image, de préférence l'écran (2a), et un support de film plan (4) maintenant un film (5) en position d'exposition, caractérisé en ce qu'une fente (4c) d'introduction et d'extraction des films plans à exposer ou exposés, est prévue le long d'une face frontale (4f) du support, et en ce qu'à l'extérieur de la fente d'introduction et d'extraction (4c) il est prévu une paire de rouleaux de transport (6, 7) servant au chargement et au déchargement du support (4), et en ce que la face frontale (4d) du support, parallèle à la fente (4c) et opposée à celle-ci, comporte au moins un évidement (4e) s'étendant dans les faces plates (4a, 4b) du support, et en ce qu'un entraîneur (9, 9a) pouvant être amené en prise avec le bord voisin d'un film plan (5) se trouvant dans le support (4) est monté sur le dispositif (1) de manière à pouvoir être relevé et abaissé dans l'évidement (4e).

2. Dispositif selon la revendication 1, caractérisé en ce que plusieurs évidements (4e) sont pratiqués sur le support (4), et en ce que chaque évidement (4e) comporte un entraîneur (9).

3. Dispositif selon l'une des revendications précédentes, caractérisé en ce que la profondeur des évidements (4e) est supérieure dans la face plate arrière (4a) du support à la distance séparant la face frontale (4f) présentant la fente (4c), de la ligne de contact des deux rouleaux (6, 7) de la paire de rouleaux de transport, et en ce que les évidements (4e) interrompent une partie de châssis (4b) située côté prise de vue, maintenant un film plan (5) se trouvant dans le support (4).

4. Dispositif selon l'une des revendications précédentes, caractérisé en ce que les entraîneurs sont formés par des leviers (9) et présentent une entaille (9a) passant derrière le bord voisin du film, à chacune de leurs extrémités libres de levier s'engageant dans les évidements (4e).

5. Dispositif selon la revendication 4, caractérisé en ce que les leviers (9) sont montés sur un arbre (10) commun qui est accouplé avec un moteur électrique (13).

6. Dispositif selon l'une des revendications précédentes, caractérisé en ce que la fente d'introduction et d'extraction (4c) s'élargit vers l'extérieur à la manière d'un entonnoir.

EP 0 192 128 B1

Fig. 2

Fig. 1

Fig. 3